# EUROPEAN PATENT APPLICATION

(11) **EP 4 357 037 A1**
(43) Date of publication of application: **24.04.2024**
(21) Application number: 22824665.8
(22) Date of filing: 12.04.2022
(51) Int. Cl.: B08B 5/00, B65H 5/00, B65H 43/08

(54) **DUST-REMOVING DEVICE**

(30) Priority: 17.06.2021 JP 2021101176
(71) Applicant: Panasonic Intellectual Property Management Co., Ltd., Osaka-shi, Osaka 540-6207 (JP)
(72) Inventor: YAGI Haruhisa, Kadoma-shi, Osaka 571-0057 (JP); MINOURA Hayase, Kadoma-shi, Osaka 571-0057 (JP); UCHIDA Osamu, Kadoma-shi, Osaka 571-0057 (JP); HIGASHIDA Satoshi, Kadoma-shi, Osaka 571-0057 (JP)
(74) Representative: Novagraaf International SA
(86) International application number: PCT/JP2022/017611
(87) International publication number: WO 2022/264670

(57) **Abstract**

A dust-removing device 100 comprises: a cover plate 102 which covers a sensor detection unit 10; and a blowing unit 104 which has a buffer tank 106, a Coanda flow path 108, and an outlet 110, and which blows a fluid F onto the cover plate 102. The buffer tank 106 temporarily stores the fluid F. The Coanda flow path 108 connects the buffer tank 106 and the outlet 110, has a curved Coanda surface 114, and guides, to the outlet 110, fluid F that has flowed into the Coanda flow path 108 from the buffer tank 106, while drawing the fluid F toward the Coanda surface 114 via the Coanda effect. The outlet 110 outputs the fluid F in a direction along the surface of the cover plate 102.

## Description

### [TECHNICAL FIELD]

The present disclosure relates to a dust-removing device.

### [BACKGROUND ART]

Conventionally, a battery in which a winding electrode group and an electrolytic solution are housed in a cylindrical outer can is known (see, for example, patent literature 1). The winding electrode group is formed by continuously transporting an elongated electrode plate and an elongated separator to a lamination position, laminating them one on the other, and winding the laminated body thus obtained.

When laminating the electrode plate and the separator, it is desirable to laminate them so that the ends thereof in the width direction are not misaligned. When transporting a transported object such as an electrode body, therefore, it is common to transport the transported object by detecting the position of the end of the product by an edge sensor and correcting a misalignment of the ends by using an edge position controller for adjustment when a misalignment of the ends is detected. Further, not only an electrode plate and a separator but also a different elongated body may be transported such that a misalignment of the ends is prevented by using an edge sensor and an edge position controller.

### [RELATED ART DOCUMENT]

### [PATENT LITERATURE]

[PATENT LITERATURE 1] JP 2007-227137

### [SUMMARY OF INVENTION]

### [TECHNICAL PROBLEM]

When the dust accumulates on a sensor detection unit, it becomes difficult to detect the end accurately. This has been addressed in some cases by blowing a fluid such as air may onto the sensor detection unit to remove the dust accumulated in the sensor detection unit by blowing it away. For more reliable removal of dust, it is conceivable to increase the flow rate of the fluid. If the flow rate is raised in a blind way, however, the dust may scatter and adhere to the transported object. For this reason, it is desirable to remove the dust from the sensor detection unit efficiently while also restricting the flow rate of the fluid.

The present disclosure addresses the situation described above, and a purpose thereof is to provide a technology for improving dust removal efficiency.

### [SOLUTION TO PROBLEM]

An embodiment of the present disclosure relates to a dust-removing device. The device includes: a cover plate that covers a sensor detection unit; and a blowing unit that includes a buffer tank, a Coanda channel, and a blow outlet and that blows a fluid onto the cover plate. The buffer tank stores the fluid temporarily. The Coanda channel connects the buffer tank and the blow outlet, has a curved Coanda surface, and guides the fluid flowing from the buffer tank into the Coanda channel to the blow outlet, pulling the fluid toward the Coanda surface by the Coanda effect. The blow outlet blows out the fluid in a direction along a surface of the cover plate.

Optional combinations of the aforementioned constituting elements, and implementations of the disclosure in the form of methods, apparatuses, and systems may also be practiced as additional aspects of the present disclosure.

### [ADVANTAGEOUS EFFECTS OF INVENTION]

According to the present disclosure, it is possible to improve the dust removal efficiency.

### [BRIEF DESCRIPTION OF DRAWINGS]

[FIG. 1]

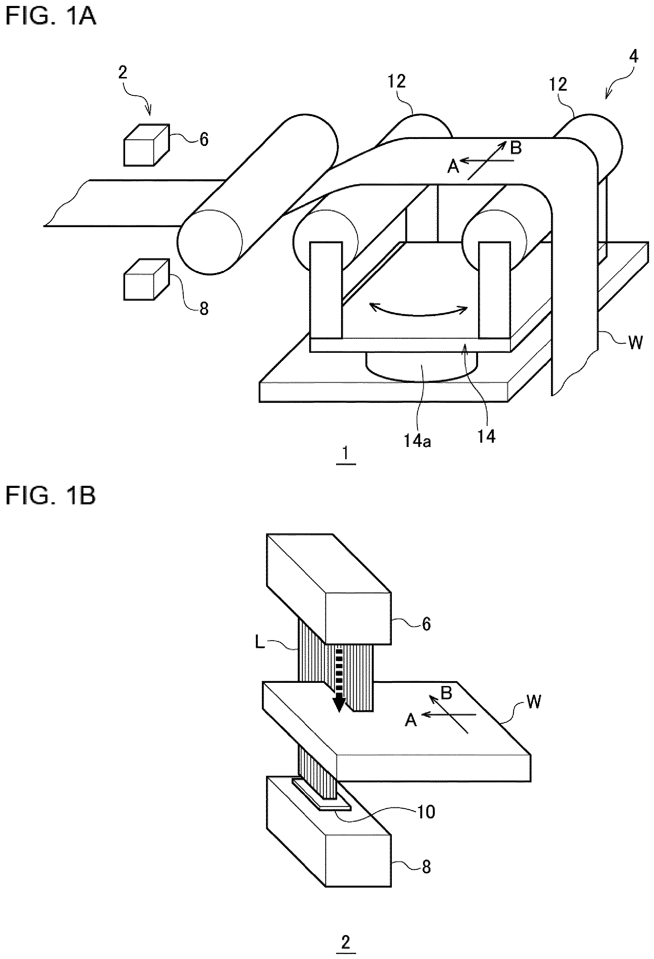

   FIG. 1A is a perspective view of an edge control mechanism to which the dust-removing device according to the embodiment is applied.
   FIG. 1B is a perspective view of an edge sensor.
[FIG. 2]

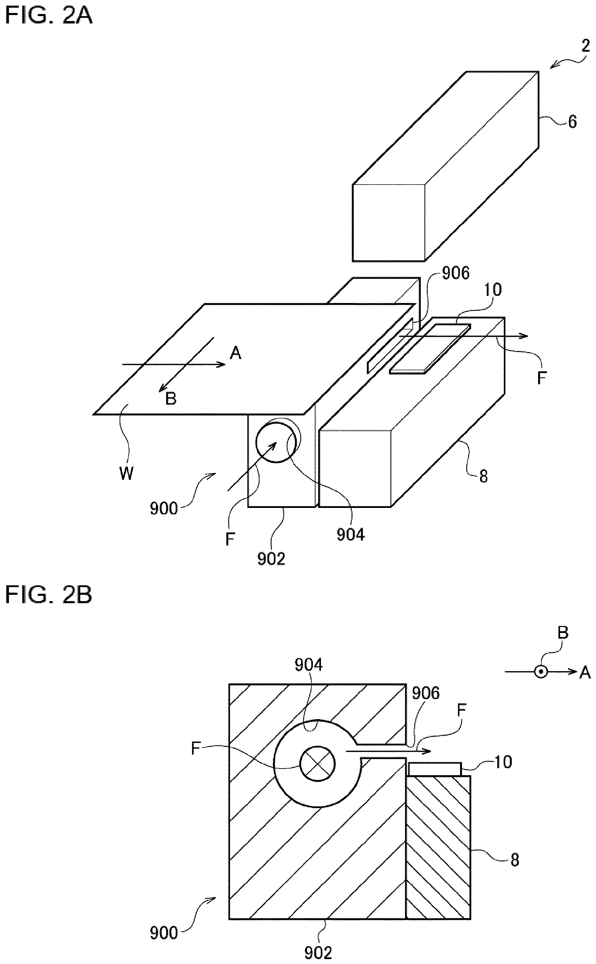

   FIG. 2A is a perspective view of the dust-removing device according to the reference example.
   FIG. 2B is a cross-sectional view of the dust-removing device according to the reference example.
[FIG. 3]

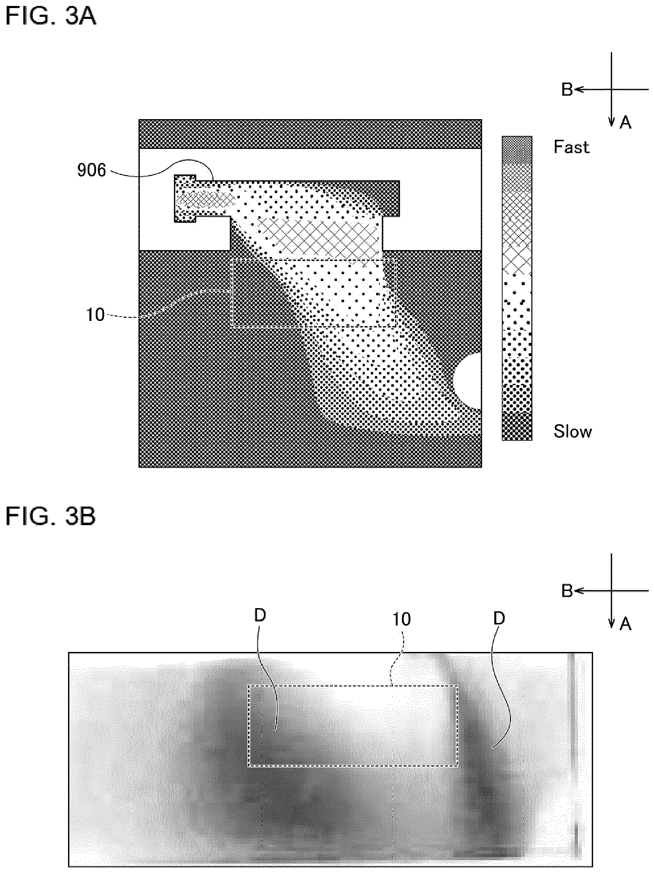

   FIG. 3A is a diagram showing a result of airflow analysis in the dust-removing device according to the reference example.
   FIG. 3B is a photo showing a result of removing the dust using the dust-removing device according to the reference example.
[FIG. 4]

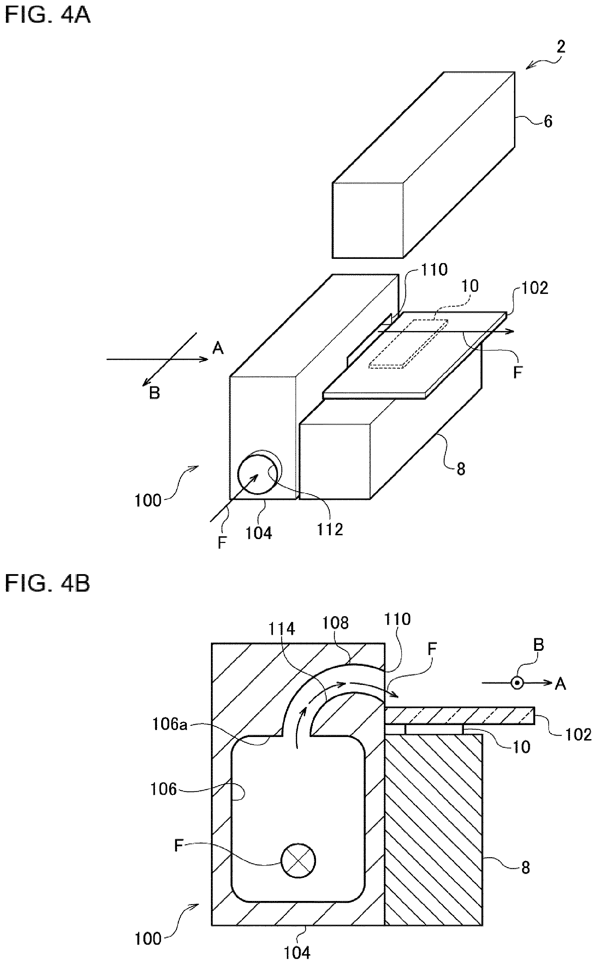

   FIG. 4A is a perspective view of the dust-removing device according to the embodiment.
   FIG. 4B is a cross-sectional view of the dust-removing device according to the embodiment.
[FIG. 5]

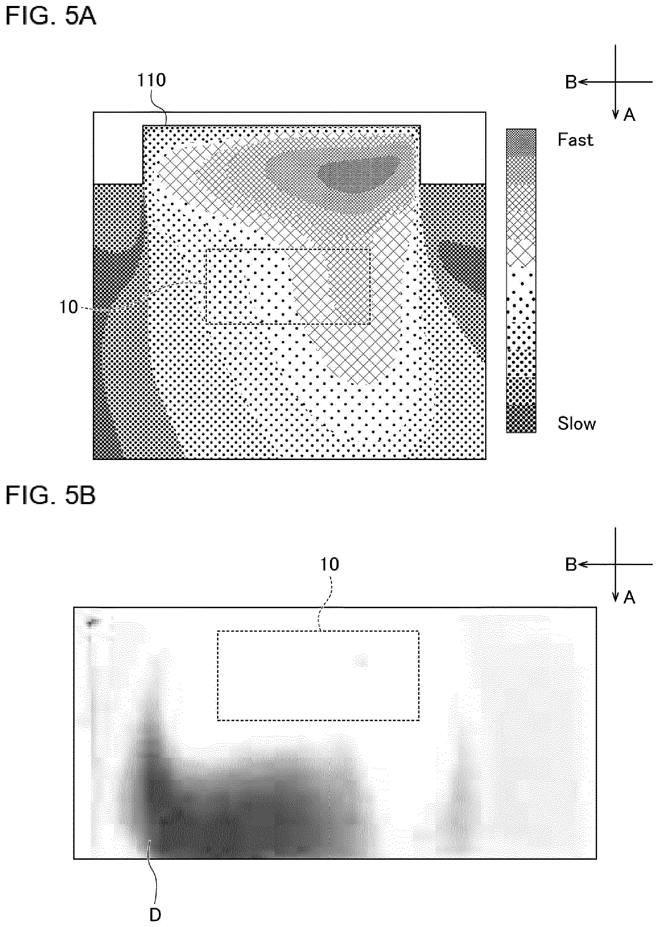

   FIG. 5A is a diagram showing a result of airflow analysis in the dust-removing device according to the embodiment.
   FIG. 5B is a photo showing a result of removing the dust using the dust-removing device according to the embodiment.
[FIG. 6]

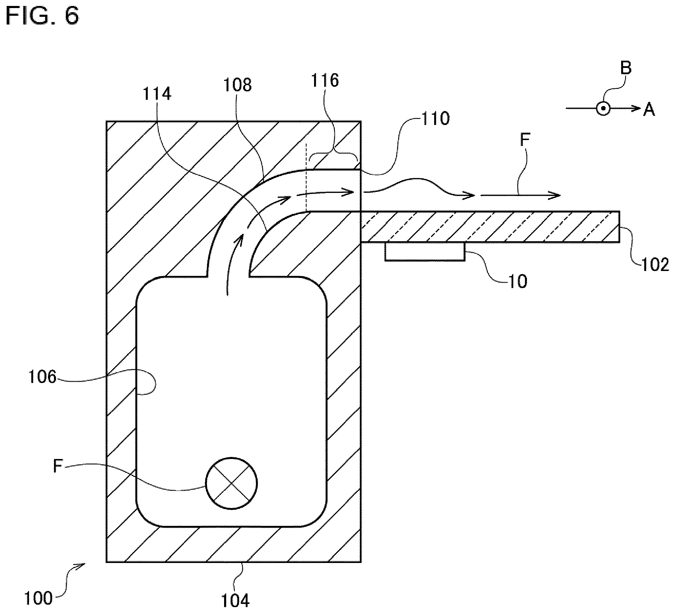

   FIG. 6 is a cross-sectional view of the dust-removing device according to variation 1.
[FIG. 7]

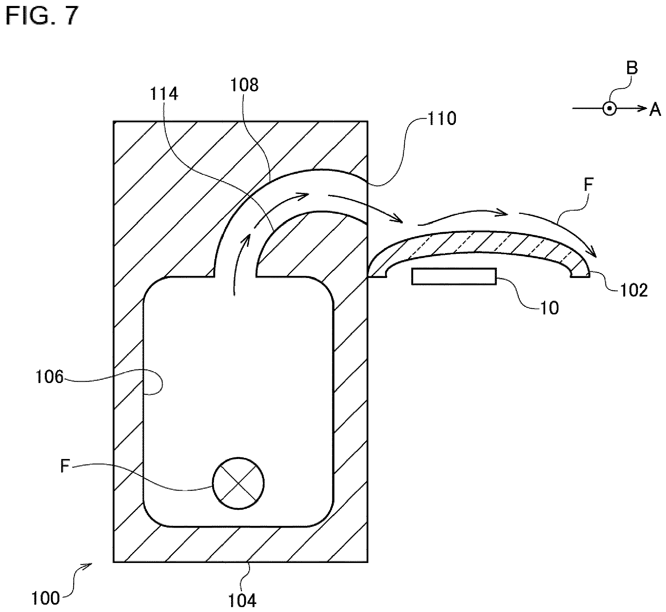

   FIG. 7 is a cross-sectional view of the dust-removing device according to variation 2.
[FIG. 8]

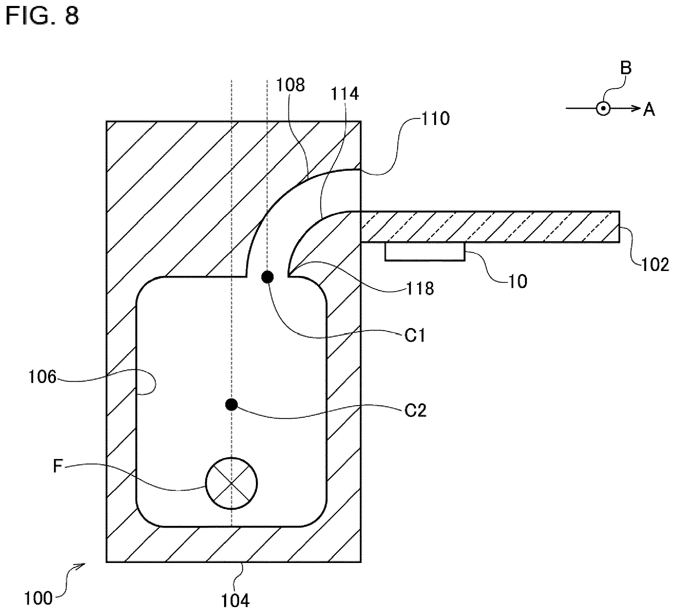

   FIG. 8 is a cross-sectional view of the dust-removing device according to variation 3.
[FIG. 9]

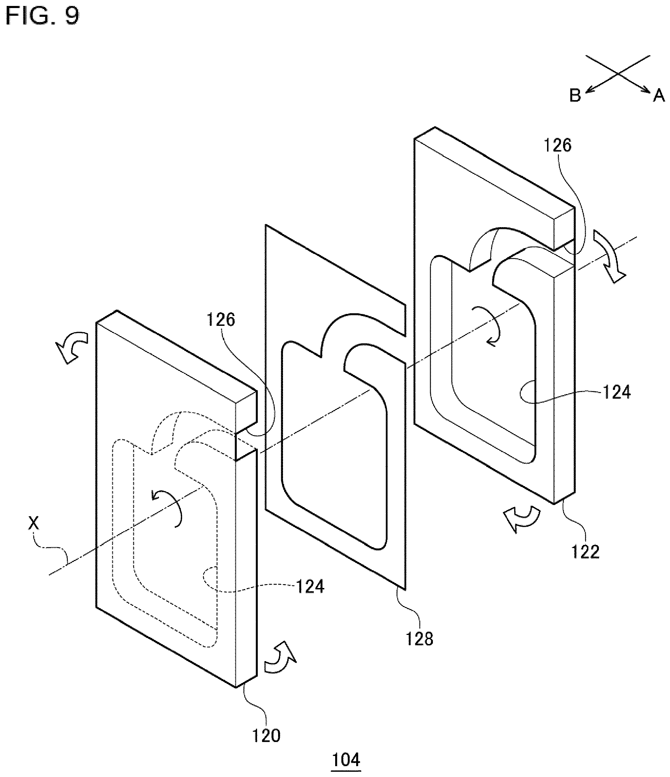

   FIG. 9 is an exploded perspective view of the blowing unit provided in the dust-removing device according to variation 4.

### [DESCRIPTION OF EMBODIMENTS]

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not important in describing the embodiment are omitted from the drawings.

FIG. 1A is a perspective view of an edge control mechanism 1 to which the dust-removing device according to the embodiment is applied. FIG. 1B is a perspective view of an edge sensor 2. In FIG. 1A, illustration of the dust-removing device is omitted.

The edge control mechanism 1 includes an edge sensor 2 and an edge position controller 4. The edge sensor 2 by way of one example includes a light emitting sensor 6 and a light receiving sensor 8. The light emitting sensor 6 and the light receiving sensor 8 are arranged at a predetermined distance from each other so that the transported object W passes between the sensors. The transported object W is an elongated body that is continuously transported by a known roll transport mechanism or the like. The position of the transported object W relative to the light emitting sensor 6 and the light receiving sensor 8 is defined such that the end in the width direction B passes between the sensors. The transported object W may be a constituent material of a battery such as an electrode plate or a separator or may be another elongated body.

The light emitting sensor 6 emits a light L having a predetermined wavelength toward the light receiving sensor 8. The light receiving sensor 8 has a sensor detection unit 10 on a surface facing the light emitting sensor 6. The sensor detection unit 10 is, for example, a light receiving element and receives the light L emitted from the light emitting sensor 6. A portion of the light L emitted from the light emitting sensor 6 is blocked by the end of the transported object W. Therefore, the edge sensor 2 can detect the position of the end of the transported object W based on the position at which the sensor detection unit 10 receives the light L.

The edge position controller 4 has a support roll 12 and a rotating table 14. The support roll 12 is a cylindrical body extending in the width direction B and supports the transported object W on its circumferential surface. The edge position controller 4 of this embodiment has two support rolls 12 arranged at a predetermined interval in the transportation direction A. Each support roll 12 rotates while supporting the transported object W to assist in the transportation of the transported object W. The rotating table 14 supports each support roll 12 and rotates about a rotation axis 14a. Thereby, the angle of each support roll 12 can be changed with respect to the transportation direction A. The rotating table 14 receives a signal indicating a detection result from the edge sensor 2 and changes the angle of each support roll 12 according to the signal. Thereby, the direction in which the transported object W travels can be changed locally. As a result, the position of the end of the transported object W can be adjusted.

When the dust accumulates on the sensor detection unit 10, light reception in the sensor detection unit 10 may be blocked. In this case, there is a risk of erroneous detection of the position of the end of the transported object W. For this reason, it is desirable to remove the dust accumulated in the sensor detection unit 10. Therefore, the light receiving sensor 8 is provided with a dust-removing device. The dust is, for example, a constituent material of the transported object W that falls off the transported object W, processing debris generated by processing the transported object W, etc. In the case the transported object W is an electrode plate, for example, the dust is an electrode active material peeled off from the electrode plate. Hereinafter, the dust-removing device will be described. The dust-removing device may be provided on the side of the light emitting sensor 6. Further, the dust-removing device may be installed in other than the edge sensor 2.

Before describing the dust-removing device according to this embodiment, we will first describe a dust-removing device 900 according to a reference example. FIG. 2A is a perspective view of the dust-removing device 900 according to the reference example. FIG. 2B is a cross-sectional view of the dust-removing device 900 according to the reference example. The dust-removing device 900 is arranged side by side with the light receiving sensor 8 in the transportation direction A. The dust-removing device 900 includes a blowing unit 902 that blows a fluid F onto the sensor detection unit 10. The fluid F is a gas such as air.

The blowing unit 902 includes a channel 904 and a blow outlet 906. The channel 904 extends linearly in the width direction B. One end of the channel 904 is connected to a fluid supply device (not shown) such as a compressor, and the fluid F flows into the channel 904 from the one end. The other end of the channel 904 is connected to the blow outlet 906. The fluid F in the channel 904 blows outside from the blow outlet 906. The blow outlet 906 has an elongated shape extending in the width direction B and blows out the fluid F in the transportation direction A. That is, a fluid F is blown onto the sensor detection unit 10 from the side. The position of the blow outlet 906 in the width direction B is determined so as to overlap the entire range of extension of the sensor detection unit 10 in the width direction B.

FIG. 3A is a diagram showing a result of airflow analysis in the dust-removing device 900 according to the reference example. FIG. 3A shows the flow velocity distribution of the fluid F blown out from the blow outlet 906. The left side in FIG. 3A corresponds to one end of the channel 904, i.e., the side where fluid F flows into the channel 904. FIG. 3B is a photo showing a result of removing the dust D using the dust-removing device 900 according to the reference example. A test was conducted in which the dust-removing device 900 is driven while the dust D is being lowered on the sensor detection unit 10. An adhesive sheet was attached to the sensor detection unit 10 tested to transfer the dust D on the sensor detection unit 10 to the adhesive sheet. The photo captures an image of the adhesive sheet. The black portion in FIG. 3B corresponds to the dust D.

As shown in FIG. 3A, the airflow is displaced from the region on the sensor detection unit 10 in the longitudinal direction of the blow outlet 906 in the dust-removing device 900 of the reference example. Specifically, the fluid F hardly flows in the portion near the upstream side of the channel 904 in the region on the sensor detection unit 10. For this reason, as shown in FIG. 3B, the dust D remains on the sensor detection unit 10.

Next, the dust-removing device 100 according to this embodiment will be described. FIG. 4A is a perspective view of the dust-removing device 100 according to the embodiment. FIG. 4B is a cross-sectional view of the dust-removing device 100 according to the embodiment. The dust-removing device 100 includes a cover plate 102 covering the sensor detection unit 10 and a blowing unit 104 that blows the fluid F onto the cover plate 102.

The cover plate 102 is a plate member extending in the transportation direction A and the width direction B and preferably covers the entirety of sensor detection unit 10. The cover plate 102 is made of a material capable of transmitting at least the light L emitted from the light emitting sensor 6. Preferably, the cover plate 102 is made of a material selected from the group consisting of polyethylene terephthalate, polycarbonate, and glass. By configuring the cover plate 102 to be made of such a material, it is possible to inhibit the light transparency of the cover plate 102 from decreasing when an alcohol-based solvent is used to clean the cover plate 102. Therefore, it is possible to inhibit a decrease in the detection accuracy of the edge sensor 2.

The blowing unit 104 is arranged side by side with the light receiving sensor 8 in the transportation direction A. The blowing unit 104 includes a buffer tank 106, a Coanda channel 108, and a blow outlet 110. The buffer tank 106 stores the fluid F temporarily. The buffer tank 106 by way of one example is substantially cuboid. The buffer tank 106 has an opening 112 that communicates the space inside the buffer tank 106 and the space outside. A fluid supply device (not shown) such as a compressor is connected to the opening 112, and the fluid F flows into the buffer tank 106 from the opening 112.

The Coanda channel 108 connects the buffer tank 106 and the blow outlet 110 to guide the fluid F in the buffer tank 106 to the blow outlet 110. In this embodiment, one end side of the Coanda channel 108 is connected to a ceiling surface 106a of the buffer tank 106. The ceiling surface 106a is a surface on the side of the transported object W. The other end side of the Coanda channel 108 is connected to the blow outlet 110. The ceiling surface 106a is located at a position more distanced from the transported object W than the blow outlet 110. For this reason, the Coanda channel 108 substantially extends from the ceiling surface 106a in the direction approaching the transported object W.

The Coanda channel 108 has a curved Coanda surface 114. The Coanda surface 114 is arc-shaped in a cross-sectional view orthogonal to the width direction B. The Coanda surface 114 extends so as to approach the transported object W from the side of the ceiling surface 106a and to approach the sensor detection unit 10 as it approaches the transported object W. The Coanda channel 108 can guide the fluid F flowing in the Coanda channel 108 to the blow outlet 110 while pulling the fluid F toward the Coanda surface 114 by the Coanda effect exhibited by the Coanda surface 114.

The blow outlet 110 has an elongated shape extending parallel to the surface of the cover plate 102. The blow outlet 110 of this embodiment extends in the width direction B. Then, the blow outlet 110 is disposed so as to blow out the fluid F in the direction along the surface of the cover plate 102. The position of the blow outlet 110 in the width direction B is determined so as to overlap the entire range of extension of the sensor detection unit 10 in the width direction B. The blow outlet 110 is disposed at the end of the cover plate 102 in the transportation direction A and blows out the fluid F in the transportation direction A substantially parallel to the surface of the cover plate 102.

FIG. 5A is a diagram showing a result of airflow analysis in the dust-removing device 100 according to the embodiment. FIG. 5A shows the flow velocity distribution of the fluid F blown from the blow outlet 110. FIG. 5B is a photo showing a result of removing the dust D using the dust-removing device 100 according to the embodiment. A test was conducted in which the dust-removing device 100 is driven while the dust D is being lowered on the sensor detection unit 10. An adhesive sheet was attached to the sensor detection unit 10 tested to transfer the dust D on the sensor detection unit 10 to the adhesive sheet. The photo captures an image of the adhesive sheet. The black portion in FIG. 5B corresponds to the dust D.

As shown in FIG. 5A, the fluid F flows in the entire region on the sensor detection unit 10 in the dust-removing device 100 of the embodiment. For this reason, as shown in FIG. 5B, no residue of the dust D is observed on the sensor detection unit 10.

As described above, the dust-removing device 100 of this embodiment includes the cover plate 102 covering the sensor detection unit 10 and the blowing unit 104 that blows the fluid F onto the cover plate 102. The blowing unit 104 includes the buffer tank 106, the Coanda channel 108, and the blow outlet 110. The buffer tank 106 stores the fluid F temporarily. Thereby, the variation in pressure of the fluid F can be reduced. For this reason, the variation in the flow velocity of the fluid F can be reduced in the longitudinal direction of the blow outlet 110.

The Coanda channel 108 guides the fluid F in the buffer tank 106 to the blow outlet 110. Further, the Coanda channel 108 has the curved Coanda surface 114. The Coanda channel 108 guides the fluid F flowing from the buffer tank 106 into the Coanda channel 108 to the blow outlet 110, pulling the fluid F toward the Coanda surface 114 by the Coanda effect. This can impart the fluid F blown out from the blow outlet 110 with directionality and control the direction of the fluid F blown out. For this reason, fluid F can flow in the entire region on the sensor detection unit 10. Further, the airflow can be concentrated on the sensor detection unit 10.

The blow outlet 110 has an elongated shape extending parallel to the surface of the cover plate 102 and blows out fluid F in a direction along the surface of the cover plate 102. The installation surface of the sensor detection unit 10 in the light receiving sensor 8 may not be flat. Even if the fluid F is blown out in the direction along the installation surface, therefore, the airflow may be disturbed by the unevenness of the installation surface, and the fluid F may not flow uniformly on the entirety of the sensor detection unit 10. By covering the sensor detection unit 10 with the cover plate 102 and blowing the fluid F along the surface of the cover plate 102, on the other hand, a uniform airflow is likely to be generated in the entire area on the sensor detection unit 10.

Thus, the airflow can hit the entire area on the sensor detection unit 10 uniformly by reducing the pressure variation of the fluid F with the buffer tank 106, imparting the airflow with directionality by the Coanda channel 108, and causing the fluid F to flow along the surface of the flat cover plate 102 that covers the sensor detection unit 10. Thereby, removal of the dust D can be limited to the minimum, necessary range. Therefore, the efficiency of removing the dust D can be improved. As a result, the amount of the dust D scattered can be reduced, and the risk of the dust D adhering to the transported object W can be reduced.

Preferably, the cover plate 102 larger than the area of the sensor detection unit 10 is used. Thereby, the dust D removed from the area on the sensor detection unit 10 can be accumulated on the outer edge of the cover plate 102. Thereby, the risk of the dust D scattering and adhering to the transported object W can be further reduced.

The embodiments of the present disclosure are described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

### (Variation 1)

FIG. 6 is a cross-sectional view of the dust-removing device 100 according to variation 1. The dust-removing device 100 of this variation differs from that of the embodiment in respect of the shape of the Coanda channel 108. That is, the Coanda channel 108 of this variation has a straight portion 116 extending parallel to the surface of the cover plate 102 between the blow outlet 110 and the Coanda surface 114. The straight portion 116 of this variation is continuous from the blow outlet 110.

By providing the straight portion 116, an airflow rising from the surface of the cover plate 102 can be generated in the vicinity of the blow outlet 110. The rising airflow can decrease the speed of the dust D falling on the sensor detection unit 10. Thereby, it is possible to drive the dust D falling on the sensor detection unit 10 to the area outside the sensor detection unit 10 easily.

### (Variation 2)

FIG. 7 is a cross-sectional view of the dust-removing device 100 according to variation 2. The dust-removing device 100 of this variation differs from that of the embodiment in respect of the shape of the cover plate 102. That is, the cover plate 102 of this variation has a convex surface curved in the direction away from the sensor detection unit 10. The R shape of the cover plate 102 can cause the surface of the cover plate 102 to function as a Coanda surface and can cause the fluid F to be pulled toward the surface of the cover plate 102 and flow accordingly. This makes it easier to remove the dust D accumulated on the surface of the cover plate 102.

When the cover plate 102 has a convex surface, it is preferable to arrange the end of the blow outlet 110 toward the sensor detection unit 10 and the vertex of the convex surface at the same height. This makes it easier for the fluid F to follow the surface of the cover plate 102.

### (Variation 3)

FIG. 8 is a cross-sectional view of the dust-removing device 100 according to variation 3. The dust-removing device 100 of this variation differs from that of the embodiment in respect of the arrangement of a connection portion 118 connecting the buffer tank 106 and the Coanda channel 108. That is, in the longitudinal direction of the blow outlet 110, i.e., in the cross section orthogonal to the width direction B, the center C1 of the connection portion 118 connected to the buffer tank 106 and the Coanda channel 108 is displaced from the center C2 of the interior space of the buffer tank 106 in the direction in which the sensor detection unit 10 and the blowing unit 104 are arranged, i.e., the transportation direction A. The connection portion 118 is an opening provided on the ceiling surface 106a and connecting the interior space of the buffer tank 106 and the Coanda channel 108. The center C1 is, for example, the geometric center of the opening. The center C2 is, for example, the volume center of the buffer tank 106, i.e., the geometric center of the shape of the interior space of the buffer tank 106.

By decentering the center C1 of the connection portion 118 with respect to the center C2 of the buffer tank 106, the direction of the fluid F blown out from the blow outlet 110 (the blowout direction in the direction of extension of the cover plate 102) can be directed to the area on the sensor detection unit 10 easily. The direction in which the center C1 of the connection portion 118 is displaced with respect to the center C2 of the buffer tank 106 (whether to approach or to be space apart from the sensor detection unit 10) and the amount of displacement can be appropriately set according to the direction in which the fluid F is to be blown out. It is considered that the direction of the fluid F blown out can be adjusted by displacing the two centers C1 and C2 because the displacement between the two centers C1 and C2 affects the Coanda effect exhibited by the Coanda surface 114. It should be noted that this phenomenon was discovered by the inventors after intensive examination.

### (Variation 4)

FIG. 9 is an exploded perspective view of the blowing unit 104 provided in the dust-removing device 100 according to variation 4. The dust-removing device 100 of this variation differs from the embodiment in respect of the shape of the blowing unit 104. That is, the blowing unit 104 of this variation has a first block 120 and a second block 122. The first block 120 and the second block 122 are made of a metal, resin, or the like having a desired rigidity. Each block has a recess 124 corresponding to a portion of the buffer tank 106 and a portion of the Coanda channel 108, and a slit 126 corresponding to a portion of the blow outlet 110.

The first block 120 and the second block 122 are stacked so that the respective recesses 124 face each other and the respective slits 126 face each other. The first block 120 and the second block 122 are stacked in the width direction B. A packing 128 is disposed between the first block 120 and the second block 122. By sandwiching the packing 128 between the two blocks, it is possible to inhibit the leakage of the fluid F from the gap between the two blocks.

Further, the first block 120 and the second block 122 are fixed to each other so that they are displaced from each other around the virtual rotation axis X extending in the stacking direction (the width direction B in this embodiment). The first block 120 and the second block 122 can be fixed to each other by a known method such as adhesion or screw fastening. For example, the first block 120 is rotated about the virtual rotation axis X so that the slit 126 is displaced in a direction away from the cover plate 102. Further, the second block 122 is rotated about the virtual rotation axis X so that the slit 126 is displaced in the direction of approaching the cover plate 102. Thus, the region in the blow outlet 110 formed by the slit 126 of the first block 120 blows out the fluid F at an elevation angle with respect to the surface of the cover plate 102. On the other hand, the region formed by the slit 126 of the second block 122 blows the fluid F in a depression angle with respect to the surface of the cover plate 102.

By making the angles of the fluid F blown out from the blow outlet 110 (the elevation and depression angles with respect to the surface of the cover plate 102) different in the longitudinal direction of the blow outlet 110, the direction of the fluid F blown out from the blow outlet 110 (the blowing direction in the direction of extension of the cover plate 102) can be directed to the area on the sensor detection unit 10 easily. The rotation direction and rotation amount of the first block 120 and the second block 122 can be appropriately set according to the direction in which the fluid F is to be blown out. It is considered that the direction of the fluid F blown out can be adjusted by making the angles of the fluid F blown out different in the longitudinal direction of the blow outlet 110 because a flow velocity difference is created between the fluid F blown out from the region on the side of the first block 120 and the fluid F blown out from the region on the side of the second block 122 in the vicinity of the blow outlet 110. It should be noted that this phenomenon was discovered by the inventors after intensive examination.

The embodiments may be defined by the following items.

### [Item 1]

A dust-removing device (100) including:
a cover plate (102) that covers a sensor detection unit (10); and
a blowing unit (104) that includes a buffer tank (106), a Coanda channel (108), and a blow outlet (110) and that blows a fluid (F) onto the cover plate (102),
wherein the buffer tank (106) stores the fluid (F) temporarily,
wherein the Coanda channel (108) connects the buffer tank (106) and the blow outlet (110), has a curved Coanda surface (114), and guides the fluid (F) flowing from the buffer tank (106) into the Coanda channel (108) to the blow outlet (110), pulling the fluid (F) toward the Coanda surface (114) by the Coanda effect, and
wherein the blow outlet (110) blows out the fluid (F) in a direction along a surface of the cover plate (102).

### [Item 2]

The dust-removing device (100) according to item 1,
wherein the Coanda channel (108) has a straight portion (116) extending parallel to the surface of the cover plate (102) between the blow outlet (110) and the Coanda surface (114) .

### [Item 3]

The dust-removing device (100) according to item 1 or 2,
wherein the cover plate (102) has a convex surface curved in a direction away from the sensor detection unit (10) .

### [Item 4]

The dust-removing device (100) according to any one of items 1 through 3,
wherein, in a cross section orthogonal to a longitudinal direction of the blow outlet (110), a center (C1) of a connection portion (118) connected to the buffer tank (106) and the Coanda channel (108) is displaced from a center (C2) of an interior space of the buffer tank (106) in a direction (A) in which the sensor detection unit (10) and the blowing unit (104) are arranged.

### [Item 5]

The dust-removing device (100) according to any one of items 1 through 4,
wherein the blowing unit (104) includes a first block (120) and a second block (122),
wherein each block (120, 122) has a recess (124) corresponding to a portion of the buffer tank (106) and a portion of the Coanda channel (108), and a slit (126) corresponding to a portion of the blow outlet (110), and
wherein the first block (120) and the second block (122) are stacked so that the respective recesses (124) face each other and the respective slits (126) face each other, and are fixed to each other so that they are displaced from each other around a virtual rotation axis (X) extending in a stacking direction (B).

### [INDUSTRIAL APPLICABILITY]

The present disclosure can be utilized in dust-removing devices.

### [REFERENCE SIGNS LIST]

10 sensor detection unit, 100 dust-removing device, 102 cover plate, 104 blowing unit, 106 buffer tank, 108 Coanda channel, 110 blow outlet, 114 Coanda surface, 116 straight portion, 118 connection portion, 120 first block, 122 second block, 124 recess, 126 slit

## Claims

1. A dust-removing device comprising:
a cover plate that covers a sensor detection unit; and
a blowing unit that includes a buffer tank, a Coanda channel, and a blow outlet and that blows a fluid onto the cover plate,
wherein the buffer tank stores the fluid temporarily,
wherein the Coanda channel connects the buffer tank and the blow outlet, has a curved Coanda surface, and guides the fluid flowing from the buffer tank into the Coanda channel to the blow outlet, pulling the fluid toward the Coanda surface by the Coanda effect, and
wherein the blow outlet blows out the fluid in a direction along a surface of the cover plate.

2. The dust-removing device according to claim 1,
wherein the Coanda channel has a straight portion extending parallel to the surface of the cover plate between the blow outlet and the Coanda surface.

3. The dust-removing device according to claim 1 or 2,
wherein the cover plate has a convex surface curved in a direction away from the sensor detection unit.

4. The dust-removing device according to any one of claims 1 through 3,
wherein, in a cross section orthogonal to a longitudinal direction of the blow outlet, a center of a connection portion connected to the buffer tank and the Coanda channel is displaced from a center of an interior space of the buffer tank in a direction in which the sensor detection unit and the blowing unit are arranged.

5. The dust-removing device according to any one of claims 1 through 4,
wherein the blowing unit includes a first block and a second block,
wherein each block has a recess corresponding to a portion of the buffer tank and a portion of the Coanda channel, and a slit corresponding to a portion of the blow outlet, and
wherein the first block and the second block are stacked so that the respective recesses face each other and the respective slits face each other, and are fixed to each other so that they are displaced from each other around a virtual rotation axis extending in a stacking direction.
